## Europäisches Patentamt

(19) **European Patent Office**

**Office européen des brevets**

(11) Publication number: **0 062 719**
**B1**

(12) # EUROPEAN PATENT SPECIFICATION

(45) Date of publication of patent specification: **01.10.86**

(51) Int. Cl.⁴: **F 24 F 3/16**

(21) Application number: **81305509.2**

(22) Date of filing: **23.11.81**

(54) **Method and apparatus for control of gas-borne particulates.**

(30) Priority: **09.04.81 GB 8111175**
**29.04.81 GB 8113173**

(43) Date of publication of application:
**20.10.82 Bulletin 82/42**

(45) Publication of the grant of the patent:
**01.10.86 Bulletin 86/40**

(84) Designated Contracting States:
**AT BE CH DE FR IT LI LU NL SE**

(56) References cited:
**BE-A- 536 592**
**FR-A-2 332 028**
**FR-A-2 461 205**
**GB-A-1 488 514**
**US-A-2 952 333**
**US-A-3 242 656**
**US-A-3 426 512**
**US-A-3 721 067**
**US-A-3 966 407**
**US-A-3 977 091**
**US-A-4 140 479**

Article "Reine Räume - Auslegung und
Einrichtung" by J.M. Pilcher, Ingenieur Digest,
Sept. 1968, Nr. 9

(73) Proprietor: **KLENZAIDS ENGINEERS PRIVATE**
**LIMITED**
**83 Thomas Street P.O. Box 622**
**Dedham Massachusetts 02026 (US)**

(72) Inventor: **Shahani, Chandru Mangaram**
**284 Enterprise**
**Forjett Hill Bombay 400 036 (IN)**

(74) Representative: **Moon, Donald Keith et al**
**BREWER & SON 5-9 Quality Court**
**Chancery Lane**
**London WC2A 1HT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

### Summary of the invention and its background

The present invention relates to a method of controlling gas-borne particulates, and more particularly, but not exclusively, is concerned with the migration and deposition of contaminating airborne particulates. It further relates to apparatus for achieving such control which may be used, for example, to obtain a work space substantially devoid of airborne particulate contaminants, both biological and non-biological, such as is necessary for the manufacture of sterile pharmaceutical products and micro-electronic components. Another use is in hospitals, where isolation of patients and prevention of contamination during surgical procedures is intended.

A paper entitled "Reine Räume — Auslegung und Einrichtung" by J. M. Pilcher in Ingenieur Digest 9 September 1968 explains that clean rooms are either of conventional design or laminar flow design. The present invention is considered to fall within the field of laminar flow design. Paragraph 20.3 of United States Federal Standard No. 209B defines "Laminar Flow" as airflow in which the entire body of air within a confined area essentially moves with uniform velocity along parallel flow lines. As mentioned hereinafter, the present invention has application to work spaces with a particulate density of less than three particles of 0.5 micron per litre of air and this is intended to be a reference to a cleanliness level of Class 100 as defined by the Federal Standard.

In order to achieve Class 100 cleanliness a high efficiency particulate air (HEPA) filter must be used. In the Federal Standard referred to above, such filters are defined as having a minimum efficiency of 99.97%.

The state of the art relating to clean rooms includes a proposal in GB—A—1488514 to provide a zone of relatively high speed clean air flow and a zone of relatively low speed clean air flow, the two flows being parallel. This proposal is made as an alternative to the previously proposed "air curtain" concept.

These proposals are not made in the context of ultra-clean rooms to Class 100 cleanliness and, more importantly, cannot be considered as being in the field of laminar flow. They are not compatible with the definition of "Laminar Flow" set forth in the Federal Standard.

In the now widely used "Laminar Flow" system for equipment like work stations, sterilizing tunnels and clean or sterile rooms there is, as stated above, an airflow in which the entire body of air within a confined area essentially moves with uniform velocity along parallel flow lines. This velocity through the cross section of the work space, is normally maintained at 27.5 metres per minute with a uniformity within plus or minus 20%. When the airflow is vertically downward this velocity can be lower, but with the uniformity maintained. The intention is to stratify the air such that minimum cross-stream particulate migration occurs with the result that activity generated particulates that become airborne are carried linearly along a predictable path.

These previously proposed methods are deficient in that when an object, for example, the workpiece or manufacturing equipment or operator, the presence of which is unavoidable in practical work situations, is introduced into the airstream, the laminar air flow is altered such that it is not possible to regulate the particulate content within the work space, as would be possible without the object altering the air flow pattern.

It is known that when an object is introduced into moving streams of air, a higher pressure exists on the upstream side than on the downstream side of the object. The pressure gradient around the object creates turbulence, which in turn leads to eddy currents around the object, with the consequent back-mix effects, which entrap in the proximity of an obstructing object particles shed by the object into the air mass around the object. This reduces the cleanliness levels otherwise obtainable.

Most articles found in a work station are, in fact, resting on one or other flat, horizontal surface. For example, operators and equipment stand on floors, work-pieces on tables, and articles to be sterilized travel on horizontal conveyor belts. See United States Patent Specification Nos. 3977091 and 4140479. In a horizontal flow configuration, the path of a flow of gas across these articles is thereby blocked at the lower extremities of the obstruction. Air streams must either go around or over the blockade which, in uniform velocity flow, they do at accelerated velocities. Manual movements in relation to a work-piece, which usually generate contaminants, tend to be in the vertical plane. This stems from the operator's need to maintain an ergonomic focal distance between his eyes and the work activity. These vertical movements add to the effects of the low pressure zone in the wake region which also alters the flow axis of the streamlines in the separated boundary above the object so that the direction of flow is downward, thereby orienting entrained particles into deposition trajectories.

The hitherto proposed uniform velocity laminar air flow systems are also liable to be affected by particulate migration caused by different energy gradient forces. Free particulates travel to the region where the energy level is lowest. For example, particulates settle under the influence of gravity; and, where a thermal gradient exists, particulates tend to move towards the cooler zone; and statically charged particulates move towards a neutralising field. In practical work situations, a single uniform velocity does not effectively counter all these energy differentials.

To circumvent these deficiencies of uniform velocity air flow systems, many methods have been proposed. These include the use of air directing devices that cause an air flow to converge, of focus an air flow, onto the obstructing work objects such that purging of the low pressure zone with filtered air is achieved. As these air streams intersect, the inherent advantages of predictability that parallel streamlines, not disturbed by the obstruction, have in removing particulate contaminants, is compromised. See United States Patent Specification No. 3426512.

Likewise, for hospital operating rooms, it has been proposed to utilize air-directing vanes which deflect at acute angles the air emanating from the filter face towards the site of the surgical activity. The air flow, on encountering the downstream wall, is retro-directed along return paths separated by a zero velocity boundary, thus obviating the use of partitions. See United States Patent Specification No. 3721067. Another method, suggest for work benches, is to short-cycle the air flow and entrained particulates, downstream of the obstruction, through apertures located on the edges of the containment surfaces including the work table. See United States Patent Specification No. 3318076.

It is an object of this invention to improve the performance of a "Laminar Flow" system as defined above, to increase the distance which airborne particulates will travel along a clean to dirty axis, for any given cross-axis movement under a potential gradient, in a laminar cross-flow of air in a clean or sterile room, or clean air work station.

It is another object of this invention to decrease the particulate contamination during sterilization and depyrogenation of objects, for example, glass containers for sterile pharmaceutical products by previously heated air, while at the same time to provide an air flow oriented to transfer heat at thermodynamically designed gradients.

According to a first aspect of the invention, there is provided a method of maintaining at a low level the concentration of gas-borne particulates in a work space, in which a laminar flow of gas is caused to execute laminar flow across the work space along a horizontal clean-to-dirty axis, characterized by the step of so generating the laminar flow that within the volume of the work space the velocity U of each of its parallel streamlines is greater than the value of U for the next superjacent streamline.

According to a second aspect of the invention, there is provided apparatus for maintaining at a low level the concentration of gas-borne particulates in a work space, in which a laminar flow of gas is caused to execute laminar flow across a horizontal work surface in a work space along a horizontal clean-to-dirty axis which is perpendicular to a vertical axis Y, characterized by grading means for so generating the laminar flow that within the volume of the work space the velocity U of each of its parallel streamlines is greater than the value of U for the next superjacent streamline.

A feature of the invention resides in providing a final filter which has a tapering formation and comprises a plurality of pleats with each successive pleat run being progressively and incrementally greater, and thereby with a larger surface area; which, with a constant media traverse air velocity gives rise to a graded pressure differential at the projected face; thus yielding a correspondingly graded exit air velocity profile.

Although the flow in accordance with the invention lacks a constant velocity for all streamlines, as required for "Laminar Flow" within the definition of the U.S. Statute referred to above, it is nevertheless "laminar" in the usual sense, that is to say, it is "laminar" as opposed to "turbulent".

Brief description of the drawings

The invention itself, however, both as to the construction and method of operation of embodiments thereof, together with additional objects and advantages thereof, will be better understood from the following description of specific embodiments when read in connection with the accompanying drawings presented by way of illustration but not limitation, in which:

Fig. 1 is a perspective view, partially cross-sectioned to show the basic elements in position, of one embodiment according to the present invention arranged in a horizontal air flow configuration where the velocity gradient is along both the horizontal and vertical axes;

Fig. 2 is a fragmentary schematic view illustrating the different axes of operation in relation to the filtering device and a bluff object obstructing the air flow graded as per Fig. 1;

Fig. 3 is similar to Fig. 1, wherein the filtering device is positioned to convey air flow in velocities graded along the vertical axis;

Fig. 4 corresponds to Fig. 2, with the air flow graded along the vertical axis;

Fig. 5 represents Bernoulli's principle;

Fig. 6 is a fragmentary schematic plan view, of a beaker placed in the path of a uniform velocity air flow;

Fig. 7 is a fragmentary schematic view in elevation, with the beaker in uniform velocity air flow;

Fig. 8 is a view corresponding to Fig. 6, with the same beaker placed in air flow graded along the horizontal axis;

Fig. 9 corresponds to Fig. 7, with the air flow velocities graded along the vertical axis and increasing in the direction of the working table;

Fig. 10 shows the trajectories followed by particles of various sizes when released in a uniform velocity air flow;

Fig. 11 corresponds to Fig. 10, with the same particles in a graded velocity air flow;

Fig. 12 is a perspective view of another form of filtering device, having an instrumentality for generating air streams of graded velocities along both the "Y" and "Z" axes, with one side partly sectioned;

Fig. 13 is a detail of the device as per Fig. 12; and

Fig. 14 graphically shows the velocity curves of the filtering device per Figure 12.

Detailed description

In each of the embodiments now to be described, a blower-pressurized housing is a source of air, incident on, and traversing without bypassing, the filtering device; which device, in addition to performing its function as a filter, delivers air in parallel airstreams which are at velocities that are graded progressively at predetermined rates. The width of the airstream arrows F is, in all Figures, in proportion to the velocity of the airstream associated with that arrow.

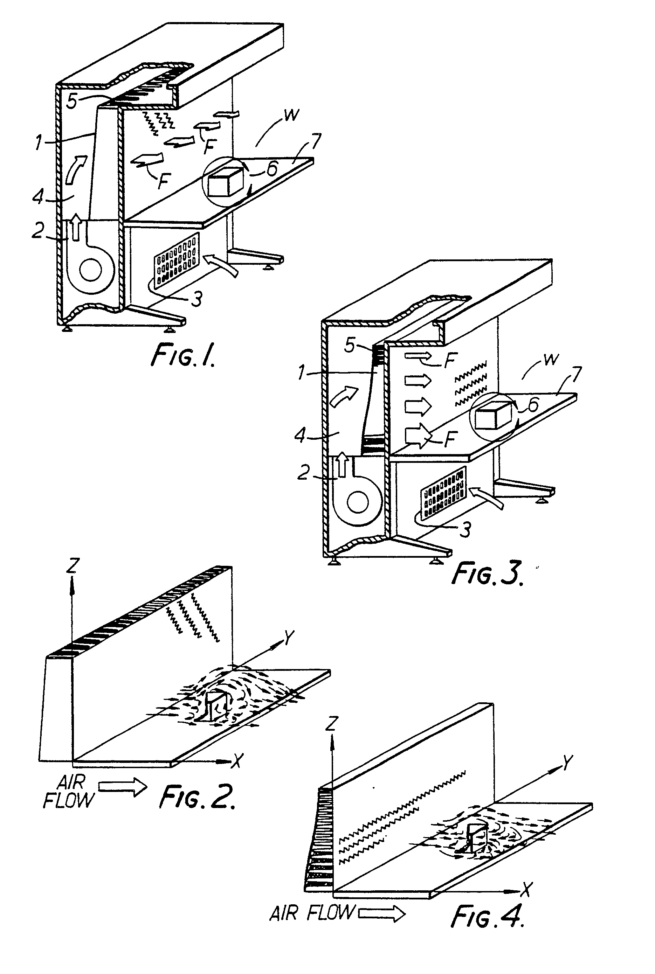

Fig. 1 schematically illustrates one embodiment of the invention, which comprises a work space W, having a particulate density of less than three particles of 0.5 micron per litre of air achieved by a device, comprising a filter 1 that filters and in addition conveys air in streamlines F of graded velocities from 20 metres per minute to 40 metres per minute; a blower 2, having an air intake through a coarse filter 3, and delivering air to a plenum 4 under sufficient pressure to get a single uniform traverse velocity of 2 to 3 metres per minute acros the Medium 5, from which the filter pleats are formed. At the projected exit face of the filtering device 1, the rate of flow is determined by the area of each pleat which successively and progressively increases from one pleat to the next along the "Y" and "Z" axes. This is depicted by Fig. 2, which also shows axis 'X' as the direction of air flow which is perpendicular to the plane represented by 'Y' and 'Z' axes. 'U' is the magnitude of the velocity of air flow. A bluff object 6, resting on a table surface 7, obstructs the air flow and gives rise to a wake or low pressure zone where turbulence is anisotropic. The streamlines that pass over the object accelerate and rise very sharply.

Referring again to Fig. 2, in a uniform velocity air flow, as there is no variation in velocity along either the 'Y' or 'Z' axis,

$$\frac{dU}{dY} = \frac{dU}{dZ} = 0.$$

Where the magnitude of the velocity of each streamline is different along the 'Y' axis or 'Z' axis or both axes, then

$$\frac{dU}{dY} = a \text{ and } \frac{dU}{dZ} = b$$

where, a and b can assume any value, or a succession of values between minus infinity and plus infinity, provided a and b are not both zero.

As the air flow is in non-intersecting streamlines, it lies within the laminar regime. This is Potential Flow along the 'X' axis. In addition to potential flow, there exists a gradient in the magnitude of the velocity vector along the 'Y' or 'Z' or both axes, giving rise to a proportional shear-stress field along the 'Y' or 'Z' or both axes, respectively. Thus, the gradient velocity air flow is, in reality, a superimposition of a traverse shear-stress field on a potential flow along the 'X' axis.

Fig. 3 shows a configuration similar to the one shown in Fig. 1, wherein the filtering device 1 is constructed and positioned such that the velocity gradient is along the 'Z' axis and the velocity increases in magnitude as it nears the table surface 7.

In Fig. 4, the obstructing object 6, within the air flow, causes an isotropic turbulence in the wake zone, but the streamlines over the object do not accelerate and rise as sharply as in Fig. 2.

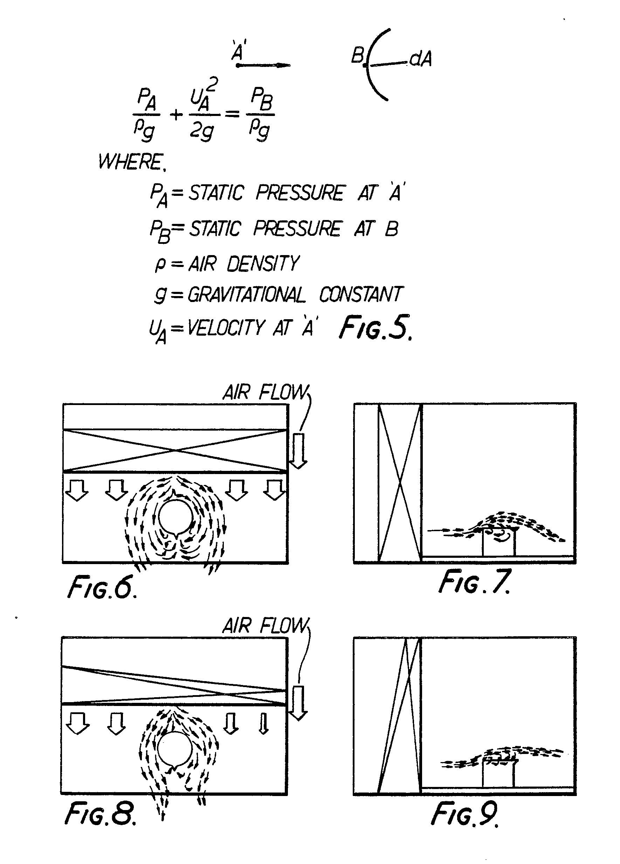

Fig. 5 depicts the principle of conservation of energy, as quantified by Bernoulli's equation. 'A' represents any point upstream of the object where flow is steady, fully devloped and time invariant. 'B' is the point of impaction on surface dA. When the angle of incidence = 0, the entire kinetic head of a streamline converts to an equivalent pressure head and 'B' is a point of stagnation. Likewise, a bundle of similarly impacting streams on a flat surface yield a corresponding bundle of stagnation points.

A uniform velocity air flow, in such a situation, would give rise to such a bundle of stagnation points, each of which is endowed with the same pressure head, thereby rendering the plane of impaction an equipotential plane. In a graded velocity air flow, each stream would impact with a different kinetic head, which reduces along a predetermined axis, convert to an equivalent pressure head which also reduces correspondingly, thereby inducing the air to flow along a predisposed direction.

With such bluff objects as are shown in Figs. 2 and 4, resting on flat surfaces that prevent air flow beneath the object, the low pressure zone is characterized by large frictional losses caused by eddies and vortices which are kept in motion by the shear-stress between this wake zone and the separated current.

Fig. 6 shows a beaker obstructing air flowing with uniform velocity. A low pressure zone covering substantially the entire rear portion is formed. Lateral boundary layer separation occurs just behind the upstream face causing streamlines to assume essentially synclastic paths. However, as shown in Fig. 7, those going over the upper edge accelerate in velocity, particularly as there is no pathway beneath the object. Once over the leaving edge, descent is visibly sharp.

In gradient flow the streamlines, as shown in Fig. 8, divide asymmetrically both over and around the object. The wake zone is both narrower and skewed and the turbulence anisotropic. The streamlines asymptotically approach an axis which is parallel to the direction of air flow, but offset from the centre of the beaker towards the higher velocity air stream.

In Fig. 9, streamlines going over the object do not descend sharply but instead flatten out and assume steady state flow parallel to the work surface.

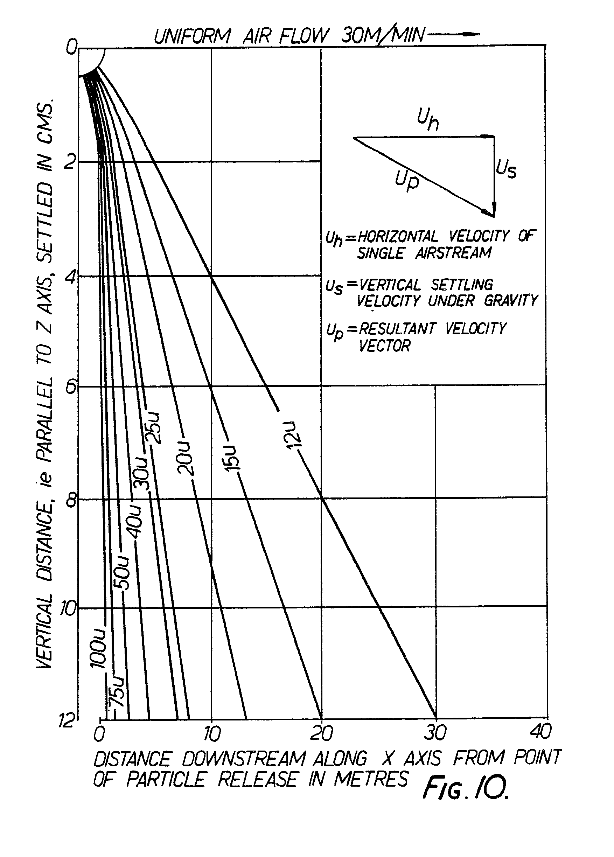

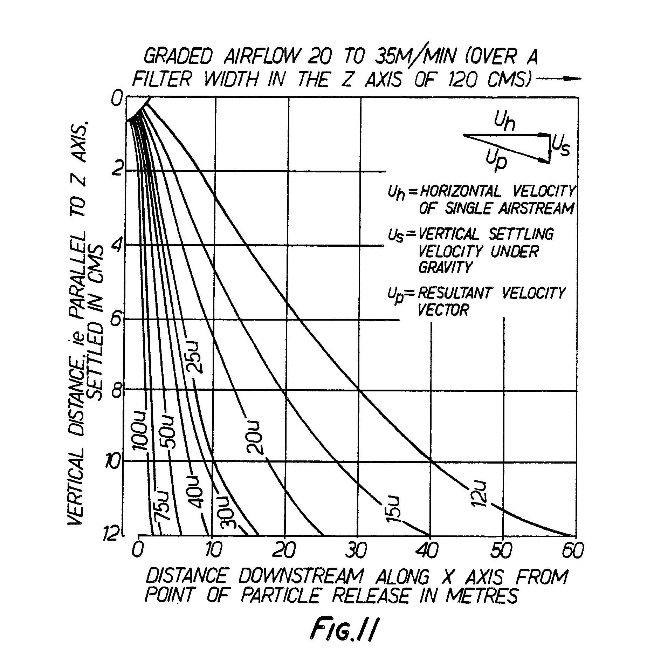

The utility of multiple velocity air streams is highlighted by Figs. 10 and 11 which plot typical curves for different trajectories followed by spherical particulates having a specific gravity of 2.0. Particulate contaminants when introduced into air streams trace a parabolic trajectory until they attain their terminal velocity; thereafter, where all streamlines are of equal and constant velocity, they exhibit a more or less straight line of descent.

Where the air streams are graded as per Fig. 11 along the vertical axis, this locus concaves upwards owing to the progressively increasing velocities encountered along the path of descent under gravity. The increase in velocity U with downward movement along the vertical axis in this way counteracts the adverse effects of an energy differential transverse to the X-axis to which the particulates are subject.

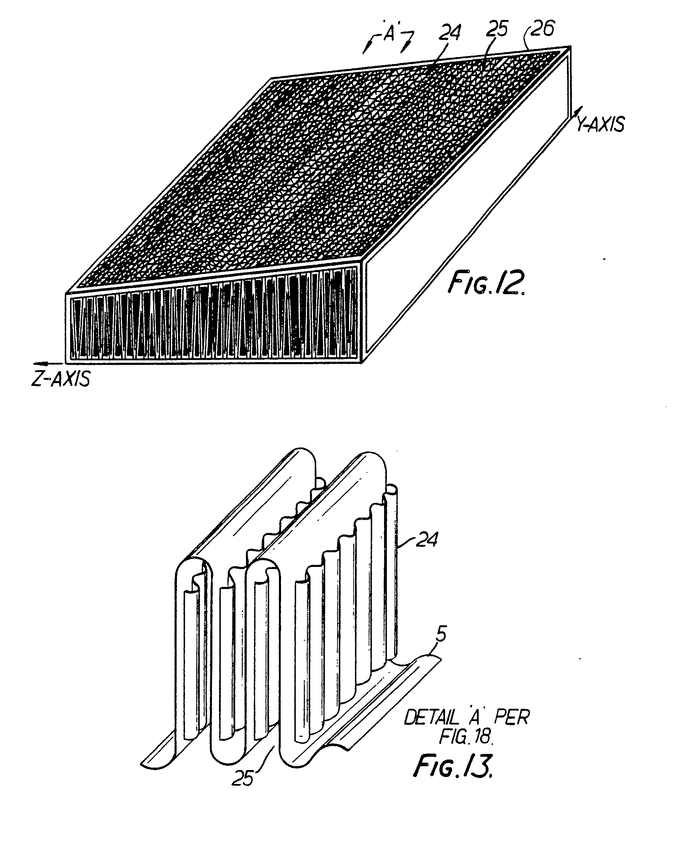

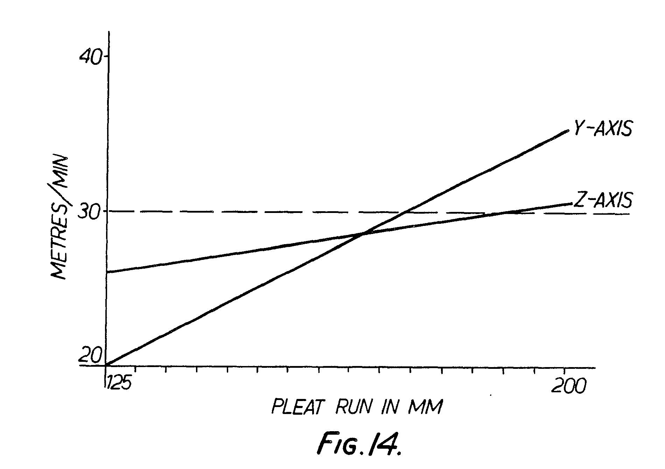

Fig. 12 shows an embodiment of filtering device which, as detailed by Fig. 13, comprises a continuous filter medium 5, pleated around separators 24, each pleat of which is supported by a wider separator with a progressive increment ranging up to 10 mm, such that they support and separate the pleats 25 formed around them and channel the air. The assembly is housed in a frame 26 and sealed to prevent bypass around the medium. The increase in surface area of successive pleats correspondingly increases the air quantity that passes through each pleat as the pressure differential and traverse air velocity across the medium 5 is constant. This air is channelled by the separators to the projected filter face, where this variable volume yields graded velocities in overlapping steps and these velocities increase with each pleat. This is graphically represented by Figure 14, where the exit air velocities plotted against the pleat run, are given for both the "Y" and "Z" axes, with the broken line representing uniform velocity flow at 30 metres per minute.

Although illustrative embodiments of the present invention have been described herewith with reference to drawings, it is to be understood that the invention is not limited to those particular embodiments and that various changes and modifications may be effected therein by one skilled in the art without departing from the scope of this invention. In particular, the pleated filter grading means can be replaced by another form of grading means which may or may not be a filter. It could be, for example, a filter membrane having a thickness which increases progressively from one edge of the membrane to an opposite edge, the membrane being arranged across the gas flow upstream of the work station. Alternatively a foraminated grille could be employed as the grading means, with the open area of the foramination array increasing progressively from one edge of the grille to an opposite edge.

**Claims**

1. A method of maintaining at a low level the concentration of gas-borne particulates in a work space, in which a laminar flow of gas is caused to execute laminar flow across the work space along a horizontal clean-to dirty axis, characterized by the step of so generating the laminar flow that within the volume of the work space the velocity U of each of its parallel streamlines is greater than the value of U for the next superjacent streamline.

2. A method according to claim 1, characterized in that U has a minimum which is at least 15 metres per minute and a maximum which is not more than 75 metres per minute.

3. A method according to claim 1 or 2 characterized by the step of pre-heating, upstream of said work space, the gas which serves to provide said laminar flow.

4. A method according to claim 3, characterized in that it is a method for sterilizing objects at temperatures in excess of 250°C.

5. Apparatus (1) for maintaining at a low level the concentration of gas-borne particulates in a work space, in which a laminar flow (F) of gas is caused to execute laminar flow across a horizontal work surface (7) in a work space (W) along a horizontal clean-to-dirty axis X which is perpendicular to a vertical axis Y, characterized by grading means (5) for so generating the laminar flow (F) that within the volume of the work space (W) the velocity U of each of its parallel streamlines is greater than the value of U for the next superjacent streamline.

6. Apparatus as claimed in claim 5, characterized in that the grading means comprises an element (1) which extends transversely over the cross-sectional area of the said laminar flow and which has a resistance to flow of gas therethrough which varies along the axis Y thereby to establish a corresponding transverse variation of velocity U downstream of said element.

7. Apparatus as claimed in claim 6, characterized in that said element (1) is a filter element.

8. Apparatus as claimed in claim 7, characterized in that said grading element (1) is a pleated filter element in which the depth of individual pleats (25) of the filter varies over the cross-section of the gas-flow.

9. Apparatus as claimed in claim 8, characterized in that the pleats (25) of the filter (1) are straight and mutually parallel, and the depth of successive pleats changes by a constant increment from one end pleat to the opposite end pleat.

10. Apparatus as claimed in claim 8 or 9, characterized in that the pleats are separated and supported by separators (24) the width of which varies in proportion to the depth of the pleats between which they are located.

**Patentansprüche**

1. Verfahren, um die Konzentration in Gas schwebender Teilchen innerhalb eines Arbeitsbereiches auf einem niedrigen Wert zu halten, bei dem ein laminarer Gasstrom zu einer laminaren Durchströmung des Arbeitsbereiches längs einer horizontalen, von rein-zu-schmutzig gerichteten Achse veranlaßt wird, dadurch gekennzeichnet, daß die laminare Strömung derart erzeugt wird, daß innerhalb des Volumens des Arbeitsbereiches die Geschwindigkeit U jeder ihrer parallelen Strömungslinien größer als der Wert von U für die nächstdarüberliegende Strömungslinie ist.

2. Verfahren nach Anspruch 1, dadurch gekennzeichnet, daß U einen Minimalwert, der wenigstens 15 m/min. beträgt, und einen Maximalwert, der nicht mehr als 75 m/min. beträgt, aufweist.

3. Verfahren nach Anspruch 1 oder 2, dadurch gekennzeichnet, daß das zur Erzeugung der laminaren Strömung dienende Gas strömungsaufwärts von dem Arbeitsraum vorgeheizt wird.

4. Verfahren nach Anspruch 3, dadurch gekennzeichnet, daß es ein Verfahren zum Sterilisieren von Gegenständen bei Temperaturen oberhalb von 250°C ist.

5. Vorrichtung (1), um die Konzentration von in Gas schwebenden Teilchen in einem Arbeitsbereich auf einem niedrigen Wert zu halten, in welchem eine lineare Gasströmung (F) dazu veranlaßt wird, eine horizontale Arbeitsfläche (7) in einem Arbeitbereich (W) längs einer horizontalen, von rein-zu-schmutzig gerichteten Achse X, die rechtwinklig zu einer vertikalen Achse Y verläuft, laminar zu überströmen, dadurch gekennzeichnet, daß Aufteilungsmittel (5) vorgesehen sind, durch die die laminare Strömung (F) derart erzeugbar ist, daß innerhalb des Volumens des Arbeitsbereiches (W) die Geschwindigkeit (U) jeder ihrer parallelen Strömungslinien größer als der Wert von U für die jeweils nächst-darüberliegende Strömungslinie ist.

6. Vorrichtung nach Anspruch 5, dadurch gekennzeichnet, daß die Aufteilungsmittel ein sich quer über die Querschnittsfläche der laminaren Strömung erstreckendes Element (1) aufweisen, das einen Strömungswiderstand für durchströmendes Gas aufweist, der längs der Y-Achse veränderlich ist, derart, daß sich eine entsprechende, querverlaufende Änderung der Geschwindigkeit U strömungsabwärts von diesem Element ergibt.

7. Vorrichtung nach Anspruch 6, dadurch gekennzeichnet, daß das Element (1) ein Filterelement ist.

8. Vorrichtung nach Anspruch 7, dadurch gekennzeichnet, daß das Aufteilungselement (1) ein gefaltetes Filterelement ist, bei dem die Tiefe der einzelnen Falten (25) des Filters sich über die Querschnittsfläche des Gasstromes ändert.

9. Vorrichtung nach Anspruch 8, dadurch gekennzeichnet, daß die Falten (25) des Filters (1) gerade und parallel zueinander sind und daß die Tiefe aufeinanderfolgender Falten sich jeweils um einen konstanten Stufenwert von einer endseitigen Falte zu der gegenüberliegenden endseitigen Falte ändert.

10. Vorrichtung nach Anspruch 8 oder 9, dadurch gekennzeichnet, daß die Falten durch Abstandsstücke (24) voneinander getrennt und gehaltert sind, deren Breite sich proportional mit der Tiefe der Falten ändert, zwischen denen sie jeweils angeordnet sind.

## Revendications

1. Procédé pour maintenir à un bas niveau la concentration des particules en suspension dans un gaz dans un espace de travail, dans lequel on contraint un flux laminaire de gaz à circuler en écoulement laminaire d'un bord à l'autre de l'espace de travail, le long d'un axe propre-sale horizontal, caractérisé par la phase consistant à engendrer le flux laminaire de telle manière que dans le volume de l'espace de travail, la vitesse U de chacun de ces filets parallèles soit supérieure à la valeur U du filet immédiatement surjacent.

2. Procédé selon la revendication 1, caractérisé en ce que U possède un minimum qui est au moins de 15 mètres par minute et un maximum qui n'est pas supérieur à 75 mètres par minute.

3. Procédé selon la revendication 1 ou 2, caractérisé par la phase de préchauffage, en amont dudit espace de travail, du gaz qui sert à former ledit flux laminaire.

4. Procédé selon la revendication 3, caractérisé en ce qu'il consiste en un procédé de stérilisation d'objets à des températures supérieures à 250°C.

5. Dispositif (1) destiné à maintenir à un bas niveau la concentration de particules en suspension dans un gaz dans un poste de travail, dans lequel on contraint un flux laminaire (F) de gaz à circuler en écoulement laminaire d'un bord à l'autre d'une surface de travail horizontale (7), dans un espace de travail (W), le long d'un axe propre-sale horizontal (X) qui est perpendiculaire à un axe vertical (Y), caractérisé par des moyens de variation progressive (5) servant à engendrer le flux laminaire (F) de telle manière que, dans le volume de l'espace de travail (W), la vitesse (U) de chacun de ses filets parallèles soit supérieure à la valeur U du filet immédiatement surjacent.

6. Dispositif selon la revendication 5, caractérisé en ce que les moyens de variation progressive comprennent un élément (1) qui s'étend transversalement sur l'aire de section dudit flux laminaire, et qui possède une résistance à l'écoulement d'un gaz à travers cet élément qui varie le long de l'axe (Y), pour établir de cette façon une variation transversale correspondante de la vitesse U en aval dudit élément.

7. Dispositif selon la revendication 6, caractérisé en ce que ledit élément (1) est un élément filtrant.

8. Dispositif selon la revendication 7, caractérisé en ce que ledit élément de variation progressive (1) est un élément filtrant plissé dans lequel la profondeur des plis individuels (25) du filtre varie sur la section de l'écoulement gazeux.

9. Dispositif selon la revendication 8, caractérisé en ce que les plis (25) du filtre (1) sont rectilignes et parallèles entre eux et en ce que la profondeur des plis successifs varie par incrémente constant du pli situé à une extrémité au pli situé à l'extrémité opposée.

10. Dispositif selon la revendication 8 ou la revendication 9, caractérisé en ce que les plis sont séparés et supportés par des séparateurs (24) dont la largeur varie en proportion de la profondeur des plis entre lesquels ils sont placés.

FIG.1.

FIG.2.

FIG.3.

FIG.4.

AIR FLOW

AIR FLOW

$$\frac{P_A}{\rho g} + \frac{U_A^2}{2g} = \frac{P_B}{\rho g}$$

WHERE,

$P_A$ = STATIC PRESSURE AT 'A'

$P_B$ = STATIC PRESSURE AT B

$\rho$ = AIR DENSITY

$g$ = GRAVITATIONAL CONSTANT

$U_A$ = VELOCITY AT 'A'

FIG.5.

AIR FLOW

FIG.6.

FIG.7.

AIR FLOW

FIG.8.

FIG.9.

2

UNIFORM AIR FLOW 30M/MIN——→

$U_h$ = HORIZONTAL VELOCITY OF SINGLE AIRSTREAM

$U_s$ = VERTICAL SETTLING VELOCITY UNDER GRAVITY

$U_p$ = RESULTANT VELOCITY VECTOR

VERTICAL DISTANCE, ie PARALLEL TO Z AXIS, SETTLED IN CMS.

100u  75u  50u  40u  30u  25u  20u  15u  12u

DISTANCE DOWNSTREAM ALONG X AXIS FROM POINT OF PARTICLE RELEASE IN METRES  FIG. 10.

GRADED AIRFLOW 20 TO 35M/MIN (OVER A
FILTER WIDTH IN THE Z AXIS OF 120 CMS)

$U_h$ = HORIZONTAL VELOCITY
OF SINGLE AIRSTREAM

$U_s$ = VERTICAL SETTLING
VELOCITY UNDER
GRAVITY

$U_p$ = RESULTANT VELOCITY
VECTOR

VERTICAL DISTANCE, ie PARALLEL TO Z AXIS.
SETTLED IN CMS

DISTANCE DOWNSTREAM ALONG X AXIS FROM
POINT OF PARTICLE RELEASE IN METRES

FIG.II

4

A' 24 25 26

Y-AXIS

FIG.12.

Z-AXIS

24

5

25

DETAIL 'A' PER
FIG.18.

FIG.13.

FIG. 14.